# DEMANDE DE BREVET EUROPEEN

(11) **EP 4 015 081 A1**
(43) Date de publication de la demande: **22.06.2022**
(21) Numéro de dépôt: 21212334.3
(22) Date de dépôt: 03.12.2021
(51) Int. Cl.: B01L 3/00, G01N 1/40

(54) **PROCÉDÉ DE RÉCUPÉRATION D'UN ÉCHANTILLON CAPTURÉ DANS UNE MEMBRANE HYDROPHILE ET DISPOSITIF DESTINÉ À METTRE EN OEUVRE LE PROCÉDÉ**

(30) Priorité: 21.12.2020 FR 2013773
(71) Demandeur: Commissariat à l'énergie atomique et aux énergies alternatives, 75015 Paris (FR)
(72) Inventeur: TROUILLON, Raphaël, 38054 GRENOBLE cedex 09 (FR)
(74) Mandataire: INNOV-GROUP

(57) **Abrégé**

L'invention concerne un procédé de récupération d'un échantillon capturé dans une zone de collecte (Z1) délimitée d'une membrane (3) hydrophile ou rendue hydrophile qui est agencée sur une surface (10) d'un composant (1) fluidique, ledit procédé consistant à réaliser une première imbibition de la membrane (3) à l'aide d'un premier liquide (L1), suivie d'une deuxième imbibition de la membrane à l'aide d'un deuxième liquide (L2), les deux liquides étant non miscibles.

## Description

### Domaine technique de l'invention

La présente invention se rapporte à un procédé de récupération d'un échantillon capturé dans une membrane hydrophile ou rendue hydrophile et à un dispositif destiné à mettre en oeuvre le procédé.

### Etat de la technique

Il est connu de réaliser un circuit fluidique dans un substrat à base de papier, en déformant le substrat de manière adaptée, par exemple par des opérations d'embossage. Des dispositifs micro-fluidiques utilisant un substrat à base de papier ont notamment été décrits dans la demande de brevet WO2018/197814A1 et WO2013181656A1**.**

Les capacités hydrophiles d'un substrat à base de papier lui permettent d'être employé sous la forme d'une membrane hydrophile destinée à capturer un échantillon. L'échantillon peut être par exemple des particules présentes dans un aérosol ou tout autre échantillon pouvant nécessiter une mise en solution en vue de sa récupération, après capture dans une membrane hydrophile.

Pour récupérer un échantillon collecté dans une membrane, il est possible de venir imprégner la membrane afin de mettre l'échantillon en solution. Cependant, cette opération ne permet souvent pas de récupérer l'ensemble de l'échantillon. A titre d'exemple, certaines particules préalablement capturées dans la membrane ne se décollent pas aisément et restent piégées dans la membrane. Le rendement de la collecte peut ainsi s'en trouver affecté.

Le but de l'invention est donc de proposer un procédé qui permette de récupérer un maximum d'un échantillon capturé dans une membrane, garantissant ainsi un bon rendement.

### Exposé de l'invention

Ce but est atteint par un procédé de récupération d'un échantillon capturé dans une zone de collecte délimitée d'une membrane hydrophile qui est agencée sur une surface d'un composant fluidique, le procédé consistant à réaliser une première imbibition de la membrane à l'aide d'un premier liquide, suivie d'une deuxième imbibition de la membrane à l'aide d'un deuxième liquide, les deux liquides étant non miscibles.

Le procédé se caractérise en ce que :
- La première imbibition est réalisée par une injection du premier liquide à travers une première zone d'injection située en périphérie de la zone de collecte, ladite première zone d'injection comportant un élément présentant un caractère absorbant au premier liquide et imperméable audit deuxième liquide, ledit élément étant en contact avec ladite membrane.
- La deuxième imbibition est réalisée par une injection du deuxième liquide à travers une deuxième zone d'injection, appartenant à la membrane et située en périphérie de de ladite zone de collecte.
- Le premier liquide présente une densité inférieure à celle du deuxième liquide.

Selon une particularité, le premier liquide est l'huile.

Selon une autre particularité, le deuxième liquide est l'eau.

Selon une autre particularité, le procédé comporte une troisième injection, à travers la première zone d'injection, d'un troisième liquide ayant une densité inférieure à celle du deuxième liquide.

Selon une autre particularité, le troisième liquide est l'huile.

L'invention concerne également un dispositif fluidique adapté pour mettre en œuvre le procédé tel que défini ci-dessus, le dispositif comportant un composant fluidique comprenant au moins une surface d'accueil et une membrane hydrophile, sur laquelle est délimitée une zone de collecte destinée à capturer un échantillon, ladite zone de collecte étant agencée pour tapisser ladite surface d'accueil du composant.

L'invention concerne également l'utilisation du dispositif tel que défini ci-dessus dans un système de collecte de particules contenues dans un aérosol.

### Brève description des figures

D'autres caractéristiques et avantages vont apparaître dans la description détaillée qui suit faite en regard des dessins annexés dans lesquels :
- Les figures 1A et 1B illustrent, par une vue de côté et de manière générale, le principe de fonctionnement du procédé de l'invention, selon deux variantes de réalisation ;
- Les figures 2A à 2C montrent plusieurs exemples de réalisation du composant pouvant être employé pour la mise en œuvre du procédé de l'invention ;
- La figure 3 montre une première variante de mise en œuvre du procédé de récupération d'échantillon ;
- La figure 4 montre une deuxième variante de mise en œuvre du procédé de récupération d'échantillon conforme à l'invention ;
- La figure 5 illustre le principe de mise en solution de l'échantillon dans le cas de la variante de réalisation de la figure 4 ;

### Description détaillée d'au moins un mode de réalisation

L'invention vise à permettre une récupération d'un échantillon préalablement capturé dans une membrane 3 hydrophile ou rendue hydrophile.

La membrane 3 est réalisée de manière indépendante. Elle est fabriquée dans un matériau hydrophile. Par son caractère hydrophile, on entend que la membrane 3 est capable de drainer un liquide par capillarité. Pour rappel, on définit la mouillabilité d'un matériau en observant l'angle de contact (le plus souvent noté a) qu'a ce dernier avec une goutte d'eau. Lorsque cet angle (aussi appelé angle de contact, ou angle de raccordement) est inférieur à 90°, la surface est dite plus ou moins hydrophile (la surface de contact entre l'eau et le matériau est élevé) et lorsqu'il est supérieur à 90°, la surface est dite plus ou moins hydrophobe (la surface de contact entre l'eau et le matériau est faible). Dans le cas de l'invention, par caractère hydrophile, on entend que la membrane présente avantageusement un angle de contact inférieur à 75° après une durée très courte inférieure à quelques secondes, par exemple de 5 secondes. Par ailleurs, pour la membrane, cet angle de contact décroît ensuite très rapidement jusqu'à passer sous 40°, l'eau pénétrant très rapidement dans le matériau. Elle présente donc un caractère très hydrophile.

La membrane 3 se présente avantageusement sous la forme d'un substrat fin, plan et souple. La membrane 3 peut se présenter sous la forme d'une bande de matière allongée, s'étendant entre une première extrémité et une deuxième extrémité suivant une direction longitudinale.

La membrane 3 peut notamment être fabriquée dans un matériau fibreux ou alvéolée, pouvant drainer un liquide. A titre d'exemple, elle peut être réalisée dans un matériau à base de cellulose (par exemple papier filtre ou équivalent), dans un matériau de type tissu à caractère hydrophile, de type mousse (éponge) ou de type fibre de verre. Des matériaux peu hydrophiles ou non hydrophiles, par exemple comme le polyéthylène, peuvent également être rendus hydrophiles par un traitement adéquat et ainsi être employés pour fabriquer la membrane et la rendre hydrophile.

L'échantillon capturé peut par exemple être composé d'un liquide ou de particules piégées dans la membrane 3.

Les particules peuvent être des micro-particules ou des nano-particules initialement présentes dans un aérosol, avant capture par la membrane 3.

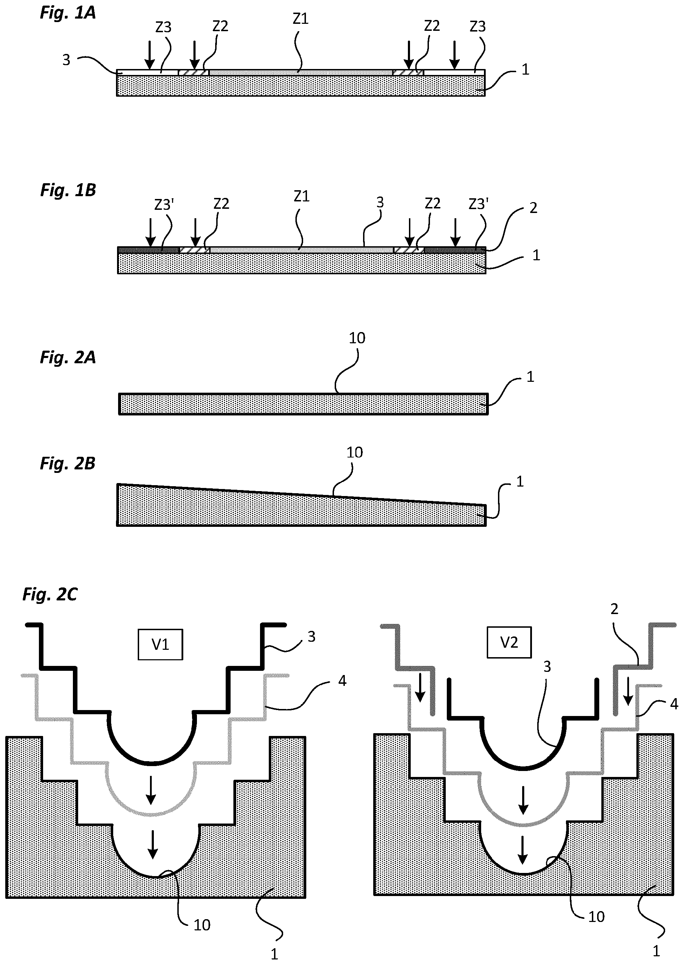

En référence à la figure 1A et à la figure 1B, le dispositif employé pour la mise en œuvre du procédé de récupération comporte un composant 1. A titre d'exemple, ce composant 1 peut être réalisé dans un matériau de type COP/COC (Cyclo Oléfin Polymère/Cyclo Olefin Copolymère), polycarbonate ou de type PMMA (Polyméthacrylate de Méthyle). Il peut notamment présenter des caractéristiques de transparence, suffisantes pour une lecture optique lorsqu'une analyse de l'échantillon est mise en œuvre directement dans le composant.

Le composant 1 comporte au moins une surface d'accueil 10 destinée à être tapissée par la membrane 3 pour réaliser un dispositif opérationnel destiné à la mise en œuvre du procédé de l'invention.

La surface d'accueil 10 du composant 1, sur laquelle est apposée la membrane 3, peut être plane et orientée à l'horizontale (figure 2A), Elle peut être plane et inclinée (figure 2B) par rapport à l'horizontale ou former un creux arrondi (figure 2C). D'autres formes pourraient bien entendu être envisagées.

Comme illustré par la figure 2C, dans les deux variantes V1, V2 représentés, la fixation de la membrane 3 sur la surface d'accueil 10 du composant 1 peut être réalisée par tous moyens, par exemple par collage, par exemple en employant un adhésif double-face 4. Sur la variante V2, un élément 2 est intercalé afin de former une zone d'injection spécifique de liquide (voir ci-après). Sur cette figure 2C, le composant est dessiné de manière à présenter plusieurs marches, marquant chacune une zone d'injection distincte, en périphérie de la surface d'accueil 10. A titre d'exemple, la partie en creux arrondi peut présenter un diamètre de 12mm et chaque marche en angle droit peut disposer une hauteur de 5mm et une largeur de 5mm.

Le procédé de l'invention s'appuie sur l'imbibition de la membrane 3 à l'aide de plusieurs liquides, afin de désorber l'échantillon capturé préalablement dans la membrane et de le mettre en solution.

Le procédé utilise au moins deux liquides L1, L2 qui sont non miscibles. Pour rappel, deux liquides sont dits non-miscibles s'ils ne peuvent pas se mélanger. Ils forment ainsi un mélange hétérogène, à plusieurs phases. Après mélange, le liquide de densité plus faible est placé au-dessus de l'autre liquide.

Le procédé peut se décliner en deux variantes. Dans les deux variantes, on a une première imbibition de la membrane 3 avec un premier liquide L1, suivie d'une deuxième imbibition de la membrane 3 à l'aide d'un deuxième liquide L2, distinct du premier liquide et non miscible avec celui-ci.

Dans une première variante du procédé, le premier liquide L1 ajouté est celui qui dispose de la densité la plus élevée et le deuxième liquide L2 ajouté est celui qui dispose de la densité la plus faible.

Dans une deuxième variante du procédé, le premier liquide L1 ajouté est celui qui disposer de la densité la plus faible et le deuxième liquide L2 ajouté est celui qui dispose de la densité la plus élevée.

De manière non limitative, les deux liquides L1, L2 non-miscibles peuvent être respectivement l'eau et l'huile, (l'eau et un hydrocarbure (hydrocarbure choisi par exemple parmi : hexane, toluène, cyclohexane, benzène, ...), un solvant polaire et un hydrocarbure, par exemple méthanol/hexane, diméthylsulfoxide/cyclohexane,...

Selon la variante du procédé ci-dessous, le premier liquide L1 ajouté sera l'eau ou l'huile et le deuxième liquide L2 ajouté sera respectivement l'huile ou l'eau.

En référence à la figure 1A et à la figure 1B, lors de la mise en œuvre des deux procédés, l'échantillon collecté dans la membrane 3 est concentré dans une zone de collecte Z1 délimitée de la membrane 3. En périphérie et donc à l'extérieur de cette zone de collecte Z1, le dispositif peut comporter plusieurs zones d'injection Z2, Z3, Z3' de liquide, agencées pour permettre au liquide injecté de rejoindre la zone de collecte à travers la membrane 3, par capillarité. On verra que la zone d'injection considéré peut appartenir à la membrane (Z2, Z3) ou à un élément 2 spécifique (Z3') en contact avec la membrane, par exemple sous la forme d'une couche déposée au moins partiellement sur la membrane 3. Cet élément 2 est choisi avec un caractère absorbant à un liquide et imperméable à l'autre liquide. A titre d'exemple, cet élément 2 peut être composé d'une couche en PDMS (Poly-Diméthyl Siloxane) déposée directement sur la membrane. Bien entendu d'autres matériaux, notamment à base de siloxane, pourraient être employés.

Comme illustré sur la figure 2C, de manière non limitative, dans la variante V2, l'élément 2 peut être intercalé entre une partie de la membrane 3 et l'adhésif double-face 4.

Pour rejoindre chaque zone d'injection, le composant 1 peut comporter un canal d'injection ménagé dans le corps du composant et débouchant au niveau de la zone d'injection ciblée.

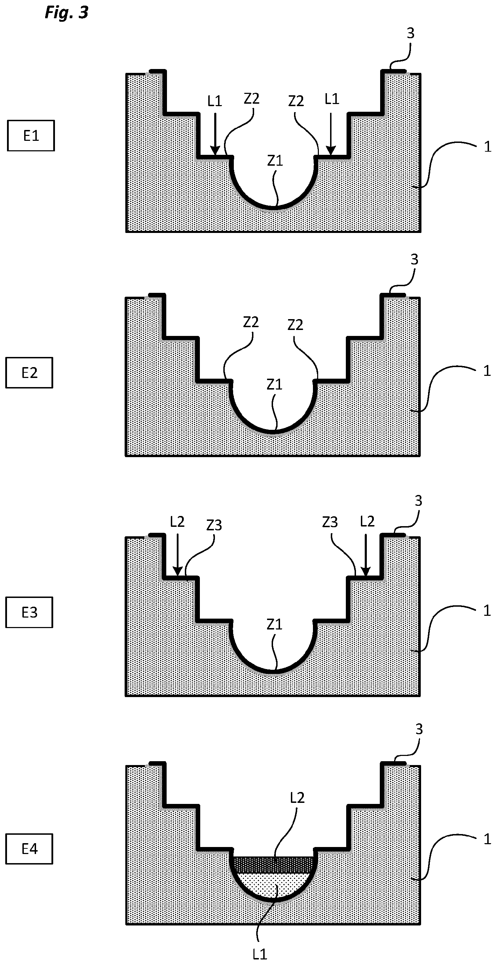

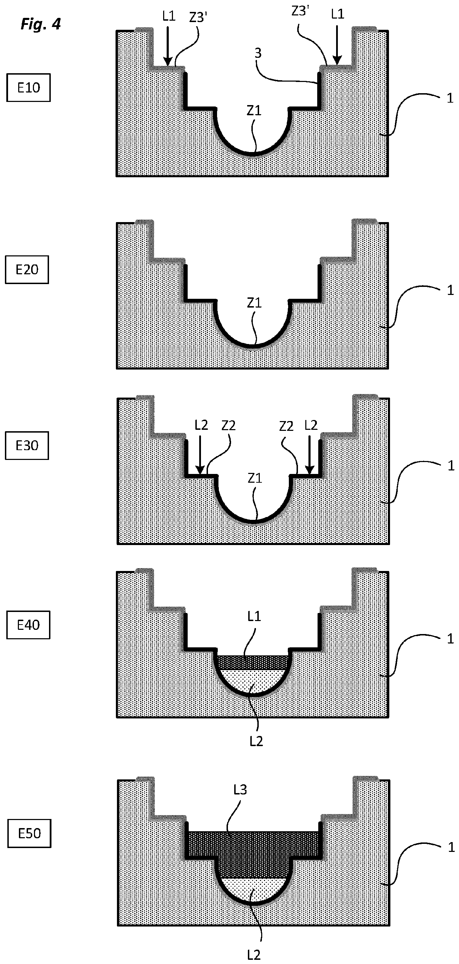

La figure 3 et la figure 4 illustrent les deux variantes de réalisation du procédé. Elles sont mises en œuvre en employant un composant tel que représenté sur la figure 2C avec une surface d'accueil 10 de la membrane qui est en forme de creux arrondi.

Dans les deux variantes, le liquide de densité la plus élevée qui est choisi est l'eau et le liquide de densité la plus faible qui est choisi est l'huile.

La zone de collecte Z1 de la membrane est chargée en échantillon. Elle est avantageusement placée dans le creux du composant 1, de manière à faciliter la mise en solution de l'échantillon capturé.

La figure 3 montre les différentes étapes du procédé, dans une première variante de réalisation.
E1 : L'eau (L1) est injectée en premier, à travers une première zone d'injection Z2 appartenant à la membrane 3 et située en périphérie de la zone de collecte Z1.
E2 : Lors d'une phase d'attente pour équilibrer le système, l'eau (L1) se propage à travers la membrane 3 par capillarité, de la zone Z2 vers la zone de collecte Z1.
E3 : L'huile (L2) est injectée à travers une deuxième zone d'injection Z3 appartenant à la membrane 3, et située en périphérie de la première zone d'injection Z2. Au niveau de la zone Z1, l'huile qui est de densité plus faible que l'eau coule de la zone à travers l'eau pour repasser au-dessus de l'eau, décollant l'échantillon de la membrane.
E4 : L'échantillon est mis en solution dans l'eau (L1), l'huile (L2) étant alors située au-dessus de l'eau.

Alternativement, il est possible d'inverser les deux liquides, l'eau injectée en premier peut être remplacée par l'huile (qui devient le liquide L1) et l'huile injectée ensuite peut être remplacée par l'eau (qui devient le liquide L2).

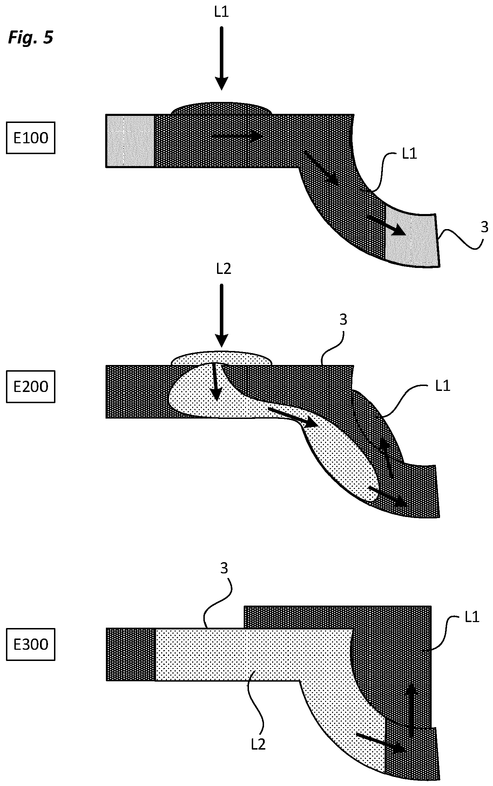

Il faut noter que l'alternative qui consiste à injecter en premier lieu le liquide de plus faible densité (ici l'huile) est la plus avantageuse. D'une part, si ce liquide est choisi de telle façon que l'échantillon y est faiblement soluble, sa présence dans la membrane va limiter la dispersion par capillarité de l'échantillon. D'autre part, la différence de densité avec le deuxième liquide injecté va permettre d'améliorer le rendement de mise en solution, suivant le mécanisme qui sera décrit ci-après en liaison avec la figure 5.

A titre d'exemple, dans cette première variante : Lors de l'étape E1, on peut injecter 100 µl d'eau (ou alternativement 20 µl d'huile) au niveau de la zone Z2. Ce liquide L1 imbibe ensuite la membrane. Puis lors de l'étape E3, on peut injecter 20µl d'huile (ou alternativement 100 µl d'eau) au niveau de la zone Z3. Bien entendu, ces quantités devront être ajustées en tenant compte notamment de la taille de la membrane, de son matériau, du type d'échantillon à récupérer.

Dans une variante de réalisation préférée illustrée par la figure 4, le procédé suit les étapes suivantes :
E10 : L'huile (L1) est injectée en premier à travers la zone d'injection Z3' en contact avec la membrane 3, via l'élément 2 situé en périphérie de la zone de collecte Z1. Comme déjà précisé, cet élément 2 est choisi absorbant pour l'huile (oléophile) et imperméable à l'eau (hydrophobe). De manière non limitative, cet élément 2 peut être composé d'une couche en PDMS (Poly-Diméthyl Siloxane) déposée directement sur la membrane. Bien entendu d'autres matériaux, notamment à base de siloxane, pourraient être employés.
E20 : Lors d'une phase d'attente pour équilibrer le système, l'huile (L1) se propage à travers la membrane 3 par capillarité, de la zone Z3' jusqu'au niveau de la zone de collecte Z1 de la membrane.
E30 : L'eau (L2) est injectée à travers la zone d'injection Z2 appartenant à la membrane 3, située en périphérie de sa zone de collecte Z1. Il faut noter que l'eau ne peut se propager à travers la zone d'injection Z3', formée de l'élément 2 précité, celui-ci étant choisi imperméable à l'eau.
E40 : L'eau étant de densité plus élevée que l'huile, elle pousse l'huile en dehors de la membrane, ce qui a tendance à décoller l'échantillon en dehors de la zone de collecte Z1 de la membrane 3. L'échantillon est ainsi mis en solution.
E50 : Une étape supplémentaire, optionnelle, peut consister à rajouter un liquide (L3) de plus faible densité que l'eau par la première zone d'injection Z3', pour former un "capot" liquide au-dessus de la solution d'échantillon. Ce principe permet notamment de conserver l'échantillon en solution et éviter son évaporation. Il permet également de limiter l'évaporation de l'échantillon lorsque son analyse nécessite un apport de chaleur (exemple lors d'une détection par réaction d'amplification). Ce liquide L3 peut être de l'huile.

A titre d'exemple, dans cette deuxième variante : Lors de l'étape E10, la membrane peut tout d'abord être chargée en huile en injectant 30 µl par la zone d'injection Z3'. Lors de l'étape E30, on peut ajouter 100 µl d'eau par la zone d'injection Z2. Lors de l'étape E50, on peut ajouter 100 µl d'huile par la zone d'injection Z3'. Bien entendu, ces quantités devront être ajustées en tenant compte notamment de la taille de la membrane, de son matériau, du type d'échantillon à récupérer.

La figure 5 illustre le principe de mise en solution de l'échantillon lors de la mise en œuvre du procédé de la figure 4.

La membrane 3 est d'abord chargée en huile (L1) par la première injection (E100). Lors de la deuxième injection (E200) par l'eau (L2), l'eau va d'abord "couler" dans l'huile puisqu'elle possède une densité plus élevée que l'huile et se répandre dans la partie inférieure de la membrane 3 puis s'accumuler au point le plus bas du système. Au fur et à mesure que de l'eau est ajoutée, la phase aqueuse remplit progressivement la membrane 3 de bas en haut, déplaçant l'huile en dehors de la membrane vers le dessus et établissant un flux convectif qui facilite la mise en solution de l'échantillon et son transfert en dehors de la membrane 3 en papier (E300).

Ainsi, dans ce dernier mode de réalisation, on constate que précharger la membrane 3 en huile avant d'y injecter une solution d'élution d'eau permet de mieux contrôler le déplacement capillaire de l'eau, limitant ainsi la dilution de l'échantillon, et améliorant sa mise en solution.

Le procédé de l'invention pourra notamment être employé pour remettre en solution des particules collectées sur la membrane et par exemple issues d'un aérosol.

Le procédé de l'invention permet ainsi :
- Un confinement de l'échantillon par flux biphasique eau/huile et une facilitation de la mise en solution de l'échantillon ;
- Une simplification du dispositif micro-fluidique en utilisant notamment un élément de type papier hydrophobe/oléophile comme port d'injection, en contact avec la membrane ;
- Un rendement de collecte important, à l'aide d'un process simple à mettre en œuvre ;

## Revendications

1. Procédé de récupération d'un échantillon capturé dans une zone de collecte (Z1) délimitée d'une membrane (3) hydrophile ou rendue hydrophile qui est agencée sur une surface (10) d'un composant (1) fluidique, le procédé consistant à réaliser une première imbibition de la membrane (3) à l'aide d'un premier liquide (L1), suivie d'une deuxième imbibition de la membrane à l'aide d'un deuxième liquide (L2), les deux liquides étant non miscibles, ledit procédé étant **caractérisé en ce que** :
- La première imbibition est réalisée par une injection du premier liquide (L1) à travers une première zone d'injection (Z3') située en périphérie de la zone de collecte (Z1), ladite première zone d'injection (Z3') comportant un élément (2) présentant un caractère absorbant au premier liquide et imperméable audit deuxième liquide, ledit élément (2) étant en contact avec ladite membrane
- La deuxième imbibition est réalisée par une injection du deuxième liquide (L2) à travers une deuxième zone d'injection (Z2), appartenant à la membrane et située en périphérie de de ladite zone de collecte (Z1),
- Le premier liquide présente une densité inférieure à celle du deuxième liquide.

2. Procédé selon la revendication 1, **caractérisé en ce que** le premier liquide (L1) est l'huile.

3. Procédé selon la revendication 2, **caractérisé en ce que** le deuxième liquide (L2) est l'eau.

4. Procédé selon l'une des revendications 1 à 3, **caractérisé en ce qu'**il comporte une troisième injection, à travers la première zone d'injection (Z2), d'un troisième liquide (L3) ayant une densité inférieure à celle du deuxième liquide.

5. Procédé selon la revendication 4, **caractérisé en ce que** le troisième liquide (L3) est l'huile.

6. Dispositif fluidique adapté pour mettre en œuvre le procédé tel que défini dans l'une des revendications 1 à 5, **caractérisé en ce qu'**il comporte un composant (1) fluidique comprenant au moins une surface d'accueil (10) et une membrane (3) hydrophile ou rendue hydrophile, sur laquelle est délimitée une zone de collecte (Z1) destinée à capturer un échantillon, ladite zone de collecte (Z1) étant agencée pour tapisser ladite surface d'accueil du composant (1).

7. Utilisation du dispositif tel que défini dans la revendication 6 dans un système de collecte de particules contenues dans un aérosol.
